Europäisches Patentamt

European Patent Office

Office européen des brevets

(19)

(11) **EP 1 241 459 A1**

(12) **EUROPEAN PATENT APPLICATION**

(43) Date of publication:
**18.09.2002 Bulletin 2002/38**

(51) Int Cl.⁷: **G01K 7/42**, G01J 5/04

(21) Application number: **01118801.8**

(22) Date of filing: **09.08.2001**

| (84) Designated Contracting States: | (72) Inventor: **Peukert, Karsten** |
| --- | --- |
| **AT BE CH CY DE DK ES FI FR GB GR IE IT LI LU MC NL PT SE TR** | **01728 Bannewitz (DE)** |
| Designated Extension States: | (74) Representative: |
| **AL LT LV MK RO SI** | **Reinhard - Skuhra - Weise & Partner** |
| | **Friedrichstrasse 31** |
| (71) Applicant: **Infineon Technologies AG** | **80801 München (DE)** |
| **81669 München (DE)** | |

(54) **A method and device for determining the process temperature of a product surface, particularly of a semiconductor wafer surface**

(57)   The following invention provides a method and device for determining the process temperature of a product surface, particularly of a semiconductor wafer surface. A product process is performed on said product (W) in a process chamber (A) at said process temperature ($T_{proc}$) and stopped at a first time ($t_{p\_end}$). Then, said product (W) is transferred from said process chamber (A) to a transfer chamber (TC), said transfer chamber (TC) having a window (F) which is transparent for heat radiation of said product (W). A temperature ($T_{meas}$) of said product (W) in said transfer chamber (TC) is measured by detecting said heat radiation of said product (W) penetrating said window (F) at a second time ($t_{meas}$). Also a temperature ($T_{TC}$) of said transfer chamber (TC) is measured. Finally, said process temperature ($T_{proc}$) is determined using a predetermined cooling curve (CC).

FIG 1

EP 1 241 459 A1

Printed by Jouve, 75001 PARIS (FR)

**Description**

The present invention relates to a method and device for determining the process temperature of a product surface, particularly of a semiconductor wafer surface.

It should be mentioned that the term semiconductor wafer as used herein is to be understood in a general form and should include all wafer substrates known in semiconductor process technology, namely raw wafers or partially processed wafers or finally processed wafers.

Although not restricted to plasma process chambers, the present invention and its underlying problems will be explained with respect to such plasma process chambers.

For example, deep trenches of wafers for semiconductor memories are manufactured using such a plasma etching process chamber. During the exothermal plasma process, the temperature has to be stabilized by a cooling means. In particular, such a cooling is achieved by guiding a coolant through the chuck where the wafer is situated. A typical chuck having such a coolant system has a lifetime of 100 plasma hours. Thereafter, it has to be replaced. However, it has been found that some chucks having such a coolant system have a considerably shorter lifetime. In other words, failures of the cooling system appear much earlier. As a consequence, the surface temperature of the wafer to be processed rises to unwanted high values. As a result, the form of the deep trenches, or generally the wafer structures to be processed, show irregularities.

Thus, it is desirable to have an indication of the temperature of the wafer surface during the plasma process or at the and of the plasma process enabling the user to find out possible failures of the chuck cooling system.

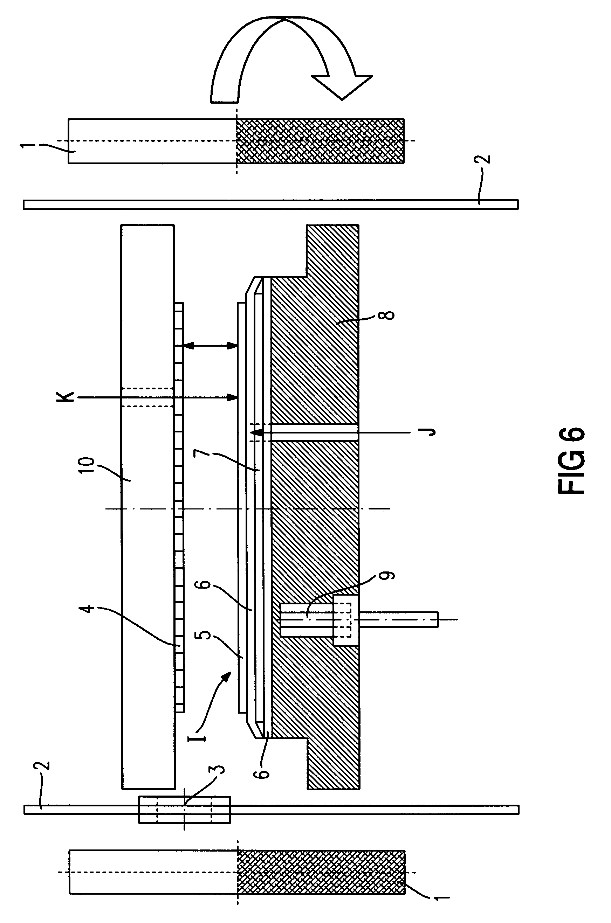

Fig. 6 shows the general layout of a usual plasma process chamber.

In Fig. 6, reference sign 1 denotes a rotatable permanent magnet, 2 a chamber wall, 3 a chamber window, 4 a quartz, also called shower head, for introducing process gases, 5 a semiconductor wafer, 6 a respective polyimid insulating layer, 7 a lower electrode, 8 a base plate support made of aluminum, 9 a wired resistance thermometer, and 10 an upper electrode.

The problem underlying the following invention is the fact that the wired resistance thermometer 9 located in the base plate support 8 is not sufficient to exactly measure the process temperature of the wafer 5 surface during the plasma process. This is mainly because of the large heat capacity of the base plate support 8 which renders the temperature measurement using said wired resistance thermometer 9 inaccurate, namely because the response to a temperature change of the wafer 5 surface is very slow.

Therefore, it would be desirable to perform a wireless wafer surface temperature measurement. Possible locations for wireless temperature measurements are indicated with I, J and K in Fig. 6.

At position I, measurements could only be performed diagonally through the window 3. Here, the rotating magnet 1 between the window 3 and a temperature sensor to be installed makes such a solution very difficult.

At position K, a measurement through the upper electrode 10 and the quartz plate 4 could be performed. However, the sensor would be directly exposed to the process, and holes in the quartz plate 4 are too small to implement a temperature sensor.

At location J, a measurement could be performed through the base plate support 8. However, this would require a redesign of the complete base plate support 8, particularly in connection with an opening in the lower electrode 7 which enhances the risk of sparking.

Also, for all three positions I, J and K, a wireless wafer surface temperature measurement during the plasma process would not be possible.

After all, a temperature measurement in the plasma process chamber would only be feasible, if expensive changes of the plasma process chamber would be performed.

Thus, it is an object of the present invention to provide a method and device for determining the process temperature of a product surface, particularly of a semiconductor surface which is easily implementable and which delivers reliable results.

According to the present invention this object is achieved by the method defined in claim 1 and the device defined in claim 10.

The general idea underlying the present invention is to perform a product surface temperature measurement after an elevated temperature process, f.e. an oven process, by a wireless pyrometric radiation measurement through a window in a transfer chamber a short time after the end of the process, said transfer chamber being adjacent to the process chamber. If the time difference between the end of the process and the pyrometric measurement is short enough, accurate results may be obtained, because the cooling curve shows an appropriate sensitivity in its early part shortly after the begin of the cooling down.

Particular advantages of the present invention are good accessibility to the window in the transfer chamber near to the process chamber exit, sufficient time slot for measurement and the fact that no changes at the tool are necessary, the latter because a wireless measurement through a standard window is used for determining the wafer surface temperature.

Preferred embodiments are part of the dependent claims.

According to a preferred embodiment, said process temperature is determined by extrapolating said predetermined cooling curve to said first time.

According to another preferred embodiment, said measuring step is repeated and said process temperature is determined by fitting a plurality of measured temperatures to said predetermined cooling curve.

According to another preferred embodiment, said measuring determining steps are repeated so as to obtain a temperature profile across the product surface.

According to another preferred embodiment, said temperature of said transfer chamber is measured at said second time by means of a thermosensor attached to said transfer chamber.

According to another preferred embodiment, said transfer chamber and said process chamber are adjacently located.

According to another preferred embodiment, said temperature of said wafer is measured with the wafer being supported by a transfer means.

According to another preferred embodiment, said extrapolating step is performed in accordance with the following relation:

$$T_{proc} = \frac{T_{meas} - T_{TC} + T_{TC}e^{-\frac{\Delta t}{\tau}}}{e^{-\frac{\Delta t}{\tau}}}$$

where $\Delta t = t_{meas} - t_{p\_end}$ is a measured time difference between said process end and measuring time and $\tau = f(c; m; \lambda; T_{TA}; \varepsilon)$ is the relaxation time which is a function f of the specific heat capacity c of the wafer W, the mass m of the wafer W, the thermal conductivity $\lambda$ of the wafer W, and the emissivity $\varepsilon$ of the wafer W.

According to another preferred embodiment, said relaxation time $\tau$ is empirically determined in advance.

Embodiments of the present invention are illustrated in the accompanying drawings and described in detail in the following.

In the Figures:

Fig. 1    a schematic drawing of a device for determining the process temperature of a semiconductor wafer surface according to an embodiment of the invention;

Fig. 2    an upper view of the arrangement shown in Fig. 1;

Fig. 3    the arrangement of the pyrometer PM above the window F for measuring the temperature of the wafer W;

Fig. 4    a typical surface structure of the wafer W;

Fig. 5    the specific radiation density RD in dependence of the wavelength $\lambda$ of the wafer W for different temperatures; and

Fig. 6    the general layout of a usual plasma process chamber.

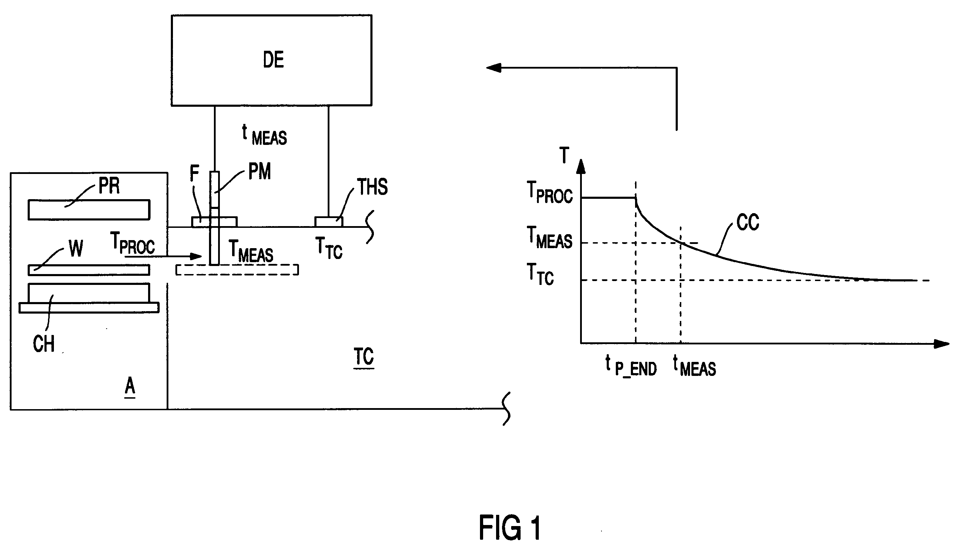

Fig. 1 shows a schematic drawing of a device for determining the process temperature of a semiconductor wafer surface according to an embodiment of the invention.

In Fig. 1, A denotes a plasma process chamber, and TC denotes a transfer chamber for transfering wafers to and from the plasma process chamber A. Not shown in Fig. 1 is a door for closing the process chamber A during the wafer process. Moreover, only a part of the transfer chamber TC is shown for reasons of clarity.

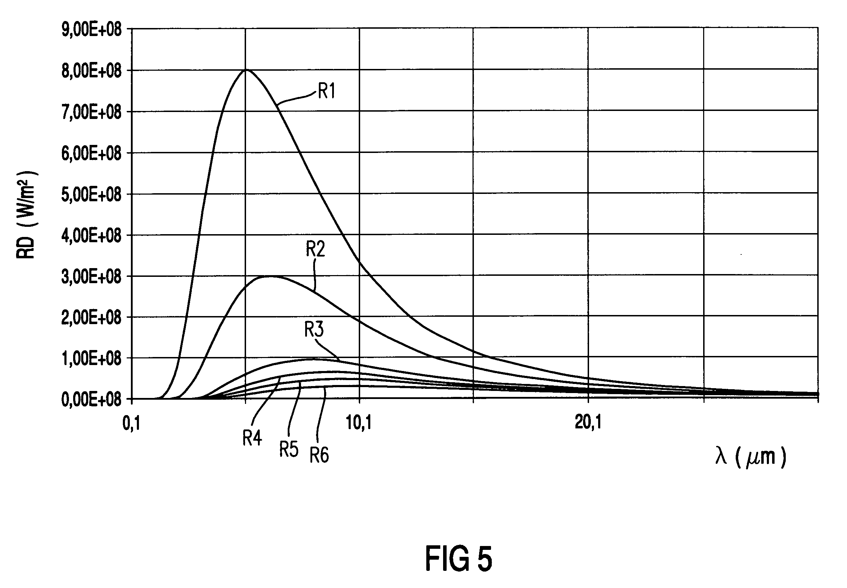

In the plasma process chamber A, there is a well-known chuck CH for carrying a wafer W during the plasma process. Moreover, PR in Fig. 1 denotes the upper electrode and the quartz (compare reference signs 4, 10 in Fig. 5).

Furthermore, F in Fig. 1 denotes a window which is transparent for heat radiation to be detected by a pyrometer PM located outside the transfer chamber TC, said heat radiation originating from a wafer located on a (not shown) handling devive under said window F.

THS is a conventional temperature sensor in the form of a thermocouple to measure the temperature $T_{TC}$ of the transfer chamber TC. Moreover, DE denotes a temperature determination means for determining the wafer surface temperature at the end of the process by means of the radiation measured from the pyrometer PM and the conventional temperature sensor THS.

For this purpose, in the temperature determination means DE, the cooling curve CC of the wafer W in the transfer chamber TC starting from a process temperature $T_{proc}$ in the process chamber and asymptotically leading to the transfer chamber temperature $T_{TC}$ is stored. Here it is assumed that the process temperature is essentially constant during the process.

Said cooling curve CC is shown in the right-hand insert of Fig. 1. The cooling curve CC shows an exponential decay starting from the process temperature $T_{proc}$ and leading to the temperature $T_{TC}$ of the transfer chamber TC which is measured by the conventional temperature sensor THS.

It should be noted that the transfer chamber TA is normally not directly heated by means of a dedicated heater, but is indirectly heated by the heat evading from the plasma process chamber A when the non-illustrated door is opened for transferring the wafer W to the transfer chamber TC. Typically, for the shown arrangement the plasma process yields temperatures between 100 and 200°C in the process chamber A which result in a temperature $T_{TA}$ of the transfer chamber of 40 to 50°C.

Thus, detecting the measurement temperature $T_{meas}$ of the wafer W at the position under the window F by means of the pyrometer PM at the measuring time $t_{meas}$ enables to extrapolate the process temperature $T_{proc}$ at the process end time $t_{p\_end}$, if the time interval elapsed since the process end is known.

Theretofore, right at the end of the process a clock timer in the temperature determination means DE is started, and the wafer W is then transferred from the process chamber A through the non-illustrated door to the transfer chamber TC to the position indicated by a dashed line. Here, the temperature $T_{meas}$ of the wafer W is measured by the pyrometer PM at the time $t_{meas}$ which is usually some seconds after the process end time $t_{p\_end}$. Said clock timer memorizes the time interval or difference between $t_{meas}$ and $t_{p\_end}$.

By evaluating the stored cooling curve CC the process temperature $T_{proc}$ at the end of the process can be obtained.

In the following, a more detailed description of the extrapolation step will be given.

The process temperature $T_{proc}$ at the end of the process is given by the following formula:

$$T_{proc} = \frac{T_{meas} - T_{TC} + T_{TC} e^{-\frac{\Delta t}{\tau}}}{e^{-\frac{\Delta t}{\tau}}}$$

where $\Delta t = t_{meas} - t_{p\_end}$ is the measured time difference and $\tau = f(c; m; \lambda; T_{TA}; \varepsilon)$ is the relaxation time which is a function f of the specific heat capacity c of the wafer W, the mass m of the wafer W, the thermal conductivity $\lambda$ of the wafer W, and the emissivity $\varepsilon$ of the wafer W.

In particular, the relaxation time $\tau$ may be determined by calibration measurements in an empirical manner.

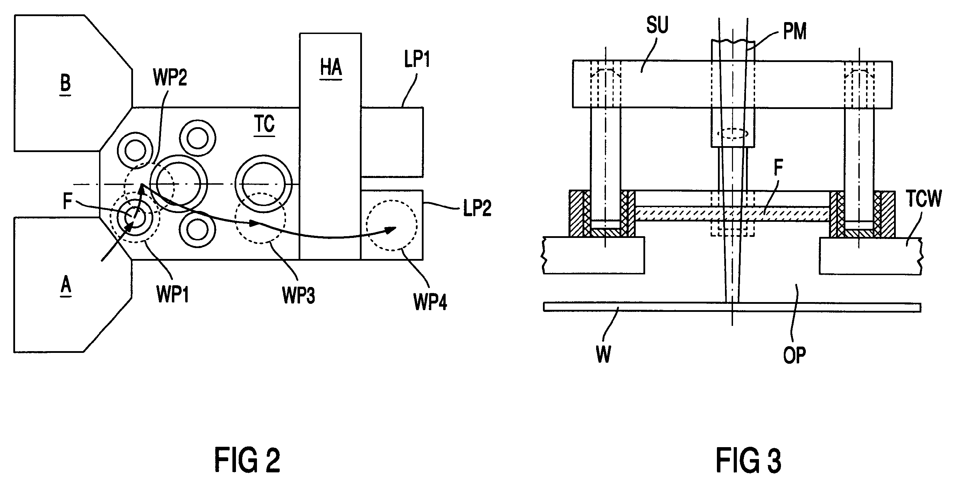

Fig. 2 denotes an upper view of the arrangement shown in Fig. 1.

In Fig. 2, B denotes a second plasma chamber which may be simultaneously used, Wp1 to Wp4 denote several wafer positions on the way of the wafer W from the process chamber A through the transfer chamber C and another handler HA to a load port LP2 which is one of two load ports LP1, LP2.

At the position of the window F, the measurement of the wafer W surface temperature using the pyrometer PM is performed, because at this window, the wafer stops for approximately for one second which is enough to determine the wafer surface temperature $T_{meas}$ by means of the pyrometer PM, as already explained above.

Fig. 3 shows the arrangement of the pyrometer PM above the window F for measuring the surface temperature of the wafer W.

As may be obtained from Fig. 3, a special support SU is used for fitting the pyrometer PM above the window F for making radiation measurements of the wafer W surface. Specifically, a transfer chamber wall TCW of said transfer chamber TC has an opening OP at the position of the window F.

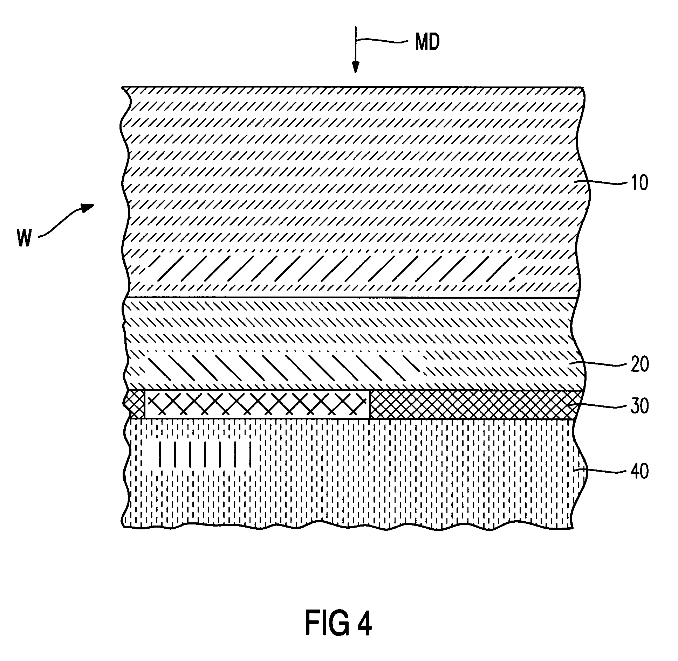

Fig. 4 shows a typical surface structure of the wafer surface, wherein MD is the measuring direction of the pyrometer PM. As illustrated Fig. 4, the wafer W surface comprises different layers, namely a first $SiO_2$ layer 10 of 300-500 nm boron doped silicon oxide, a second layer 20 of 220 nm of silicon nitride, a third layer 30 of $SiO_2$ padoxid of less than 10 nm, all above an underlying silicon wafer substrate 40.

It should be noted that the pyrometer PM radiation measurement has to be fine-tuned or adjusted to the individual wafer surface structure. However, this fine-tuning is well-known in the art.

Fig. 5 shows the specific radiation density RD in $W/m^2$ in dependence of the wavelength $\lambda$ of the wafer W for different temperatures, namely curve R1 for 300°C, curve R2 for 200°C, curve R3 for 100°C, curve R4 for 70°C, curve R5 for 50°C and curve R6 for 20°C.

As may be clearly seen in Fig. 5, the radiation density curves R1-R6 show a pronounced narrow maximum for higher temperatures, such as the curve R1 at 5.1 µm at 300°C. For decreasing temperatures, the respective maximum broadens which decreases sensitivity. However, this is not a disadvantage, because typically temperatures well above 20°C will be measured.

Although the present invention has been described with regard to a specific embodiment, it is not limited thereto, but may be modified in many ways.

Particularly, it is possible to make more than one temperature measurement through the transfer chamber window at a single wafer location and to fit a cooling curve by means of at least a square fit to a plurality of measured temperature values.

Also, said relaxation time $\tau$ does not have to be empirically determined in advance, but can also be calculated.

Particularly, it is also possible to make more than one temperature measurement through the transfer chamber window at different wafer locations so as to obtain a temperature profile across the wafer surface. This can be achieved by arranging a plurality of transfer stops or, if the pyrometer is fast enough, by having a specific wafer transfer velocity.

REFERENCE SIGNS

| | |
|---|---|
| DE | temperature determination means |
| A,B | plasma process chambers |
| TC | transfer chamber |
| OP | opening |
| TCW | transfer chamber wall |
| W | wafer |
| CH | chuck |
| F | window |
| $T_{proc}$ | process temperature |
| $T_{meas}$ | measuring temperature |
| $t_{meas}$ | measuring time |
| $t_{p\_end}$ | process end time |

| PR, 10 | upper electrode |
|---|---|
| $T_{TC}$ | transfer chamber temperature |
| WP1-4 | wafer positions |
| LP1,LP2 | load ports |
| HA | handler |
| SU | support |
| PM | pyrometer |
| 10 | oxide layer |
| 20 | nitride layer |
| 30 | padoxide layer |
| 40 | wafer substrate |
| MD | measuring direction |
| R1-R6 | radiation curves |

**Claims**

1. A method for determining the process temperature of a product surface, particularly of a semiconductor wafer surface, comprising the steps of:

    performing a process on said product (W) in a process chamber (A) at said process temperature ($T_{proc}$) ;

    stopping said process at a first time ($t_{p\_end}$) ;

    transfering said product (W) from said process chamber (A) to a transfer chamber (TC), said transfer chamber (TC) having a window (F) which is transparent for heat radiation of said product (W);

    measuring a temperature ($T_{meas}$) of said product (W) in said transfer chamber (TC) by detecting said heat radiation of said product (W) penetrating said window (F) at a second time ($t_{meas}$);

    measuring a temperature ($T_{TC}$) of said transfer chamber (TC); and

    determining said process temperature ($T_{proc}$) using a predetermined cooling curve (CC).

2. The method according to claim 1, wherein said process temperature ($T_{proc}$) is determined by extrapolating said predetermined cooling curve (CC) to said first time ($t_{p\_end}$).

3. The method according to claim 1, wherein said measuring step is repeated and said process temperature ($T_{proc}$) is determined by fitting a plurality of measured temperatures to said predetermined cooling curve (CC).

4. The method according to claim 1, wherein said measuring determining steps are repeated so as to obtain a temperature profile across the product surface.

5. The method according to one of the preceeding claims, wherein said temperature ($T_{TC}$) of said transfer chamber (TC) is measured at said second time ($t_{meas}$) by means of a thermosensor (THS) attached to said transfer chamber (TC).

6. The method according to claim 1, wherein said transfer chamber (TC) and said process chamber are adjacently located.

7. The method according to claim 1, wherein said temperature ($T_{meas}$) of said product (W) is measured with the product (W) being supported by a transfer means.

8. The method according to claim 2, wherein said extrapolating step is performed in accordance with the following relation:

$$T_{proc} = \frac{T_{meas} - T_{TC} + T_{TC}e^{-\frac{\Delta t}{\tau}}}{e^{-\frac{\Delta t}{\tau}}}$$

where $\Delta t = t_{meas} - t_{p\_end}$ is a measured time difference between said first and second time ($t_{meas}$, $t_{p\_end}$) and $\tau = f(c; m; \lambda; T_{TA}; \varepsilon)$ is the relaxation time which is a function f of the specific heat capacity c of the product (W), the mass m of the product (W), the thermal conductivity $\lambda$ of the product (W), and the emissivity $\varepsilon$ of the product (W).

9. The method according to claim 8, wherein said relaxation time $\tau$ is empirically determined in advance.

10. A device for determining the process temperature of a product surface, particularly of a semiconductor wafer surface, comprising:

    a transfer means for transfering said product (W) from a process chamber (A) starting at process temperature ($T_{proc}$) and at a first time ($t_{p\_end}$) to a transfer chamber (TC), said transfer chamber (TC) having a window (F) which is transparent for heat radiation of said product (W);

    a first measuring means (PM) for measuring a temperature ($T_{meas}$) of said product (W) in said transfer chamber (TC) by detecting said heat radiation of said product (W) penetrating said window (F) at a second time ($t_{meas}$);

    a second measuring means (THS) for measuring a temperature ($T_{TC}$) of said transfer chamber (TC);

a determining means (DE) for determining said process temperature ($T_{proc}$) using a stored predetermined cooling curve (CC) to said first time ($t_{p\_end}$).

11. The device according to claim 10, wherein said determining means (DE) determines said process temperature ($T_{proc}$) by extrapolating said predetermined cooling curve (CC) to said first time ($t_{p\_end}$).

12. The device according to claim 10, wherein said measuring means (PM) repeates said temperature measurement and said determining means (BE) determines said process temperature ($T_{proc}$) by fitting a plurality of measured temperatures to said predetermined cooling curve (CC).

13. The device according to claim 10, wherein said measuring means and said determining means (DE) are designed to repeate said measuring and determining steps so as to obtain a temperature profile across the product surface.

14. The device according to one of the preceeding claims 10 to 13, wherein said second measuring means (THS) is a thermosensor (THS) attached to said transfer chamber (TC).

15. The device according to claim 10, wherein said transfer chamber (TC) and said process chamber are adjacently located.

16. The device according to claim 10, comprising a transfer means for supporting said product (W) in said transfer chamber (TC).

17. The device according to claim 11, wherein said determining means (DE) determines said process temperature ($T_{proc}$) performs said extrapolation in accordance with the following relation:

$$T_{proc} = \frac{T_{meas} - T_{TC} + T_{TC}e^{-\frac{\Delta t}{\tau}}}{e^{-\frac{\Delta t}{\tau}}}$$

where $\Delta t = t_{meas} - t_{p\_end}$ is a measured time difference between said first and second time ($t_{meas}$, $t_{p\_end}$) and $\tau = f(c; m; \lambda; T_{TA}; \varepsilon)$ is the relaxation time which is a function f of the specific heat capacity c of the product (W), the mass m of the product (W), the thermal conductivity $\lambda$ of the product (W), and the emissivity $\varepsilon$ of the product (W).

18. The device according to claim 17, wherein said relaxation time $\tau$ is empirically determined in advance.

FIG 1

DE

THS

$T_{TC}$

$t_{MEAS}$

PM

F

$T_{MEAS}$

PR

$T_{PROC}$

W

CH

A

TC

T

$T_{PROC}$

$T_{MEAS}$

$T_{TC}$

CC

$t_{P\_END}$  $t_{MEAS}$

**FIG 2**

**FIG 3**

EP 1 241 459 A1

FIG 4

FIG 5

FIG 6

**European Patent Office**

## EUROPEAN SEARCH REPORT

Application Number

EP 01 11 8801

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 190 037 B1 (DAS ASHOK  ET AL) 20 February 2001 (2001-02-20) <br><br> * column 2, line 1 - line 12 * | 1,2,6,7, 10,11, 15,16 | G01K7/42 <br> G01J5/04 |
| X | * column 2, line 53 - line 67 * <br><br> * column 3, line 55 - line 67 * <br> * column 6, line 6 - line 11; figures * | 3,4,12, 13 | |
| A | GB 2 337 121 A (MOTOROLA LTD) 10 November 1999 (1999-11-10) <br> * abstract; figures * | 1,5,7, 10,14,16 | |

TECHNICAL FIELDS SEARCHED    (Int.Cl.7)

G01K
G01J

The present search report has been drawn up for all claims

| Place of search | Date of completion of the search | Examiner |
|---|---|---|
| THE HAGUE | 7 January 2002 | Ramboer, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03 82 (P04C01)

**EP 1 241 459 A1**

ANNEX TO THE EUROPEAN SEARCH REPORT
ON EUROPEAN PATENT APPLICATION NO.

EP 01 11 8801

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2002

| Patent document cited in search report | | Publication date | Patent family member(s) | | Publication date |
|---|---|---|---|---|---|
| US 6190037 | B1 | 20-02-2001 | JP | 2001021416 A | 26-01-2001 |
| GB 2337121 | A | 10-11-1999 | DE | 19920401 A1 | 11-11-1999 |

EPO FORM P0459

For more details about this annex : see Official Journal of the European Patent Office, No. 12/82